# EUROPÄISCHE PATENTSCHRIFT

(11) **EP 3 984 436 B1**
(45) Veröffentlichungstag und Bekanntmachung des Hinweises auf die Patenterteilung: **17.07.2024**
(21) Anmeldenummer: 21197913.3
(22) Anmeldetag: 21.09.2021
(51) Int. Cl.: B08B 3/02, B05B 3/06, B05B 13/00, B05B 14/30, B05B 15/63, B05B 15/652, A47L 11/40, A47L 11/03, A47L 11/04

(54) **FLÄCHENREINIGER MIT MEHRFACHNUTZEN**
MULTIPLE USE SURFACE CLEANER
NETTOYANT DE SURFACE À USAGE MULTIPLE

(30) Priorität: 13.10.2020 DE 102020126790
(43) Veröffentlichungstag der Anmeldung: 20.04.2022
(73) Patentinhaber: Mosmatic AG, 9126 Necker (CH)
(72) Erfinder: RIEBEN, Patrick, 9126 Necker (CH)
(74) Vertreter: Riebling, Peter

(56) Entgegenhaltungen:
- WO-A1-2010/142347
- AU-B2- 587 113
- DE-A1- 102010 003 079
- DE-B4- 10 066 009
- DE-U1- 202009 005 636
- US-A- 5 711 051
- US-A- 5 991 968
- US-B1- 10 017 006

## Beschreibung

Die Erfindung betrifft einen Flächenreiniger mit Mehrfachnutzen nach dem Oberbegriff des Patentanspruchs 1.

Mit dem Gegenstand der DE 20 2009 005 636 U1 und der DE 100 66 009 B4 sind Flächenreiniger bekannt geworden, die sich dadurch auszeichnen, dass ein Rotorarm im Innenraum eines etwa zylindrischen Gehäuses unter Einwirkung eines Hochdruckmediums rotierend angetrieben ist und mit seinen schräge gegenüber der bodenseitigen Reinigungsfläche gerichteten Sprühdüsen eine Abreinigung der Reinigungsfläche ausführt.

Ein solcher Flächenreinigungskopf mit Flächenreinigungsanordnungen ist beispielsweise auch mit dem Gegenstand der DE 10 2010 003 079 A1 bekannt geworden.

Nachteil der bekannten Anordnungen ist allerdings, dass ein Mehrfachnutzen nicht möglich ist. Unter dem Begriff "Mehrfachnutzen" wird verstanden, dass der Flächenreiniger nicht nur für die Abreinigung von Bodenflächen verwendet werden kann, sondern auch für die Abreinigung von den Bodenflächen im Abstand gegenüberliegenden, annähernd horizontalen Flächen, wie z. B. den Unterbodenflächen von Kraftfahrzeugen oder anderen abzureinigenden Flächen.

Die US 5 991 968 A offenbart einen Flächenreiniger nach dem Oberbegriff des Patentanspruchs 1. In den Figuren 32 bis 37 einen Flächenreiniger mit Mehrfachnutzen gezeigt, der mindestens zwei verschiedene Reinigungsmodi ermöglicht. Der eine Reinigungsmodus dient zur Reinigung von Fußbodenflächen, während der zweite Reinigungsmodus zur Reinigung von Wand- und/oder Deckenflächen dient. Der gezeigte Flächenreiniger besteht allerdings aus 2 verschiedenen Fahrwerken, wobei das erste Fahrwerk ein Hubrahmen mit sich am Boden abstützenden Lenkrollen ist und der Flächenreiniger in zwei einander gegenüberliegenden horizontalen Drehgelenken mit seinem zweiten Fahrwerk heb- und senkbar, sowie um 180° wendbar im Hubrahmen des ersten Fahrwerkes angeordnet ist. Damit besteht der Nachteil, dass im geringen Abstand übereinanderliegende Flächen aufgrund der Größe des Flächenreinigers nicht gereinigt werden können. So ist es beispielsweise mit einem solchen Flächenreiniger nicht möglich, im ersten Betriebsmodus die Reinigung eines Bodens und im zweiten Betriebsmodus eine Reinigung einer dicht über dem Boden liegenden Reinigungsfläche, insbesondere zum Beispiel einen Unterboden eines Kraftfahrzeuges, zu reinigen, wobei stets für eine Abstützung des Gehäuses gegenüber einer Bodenfläche gesorgt ist.

Die WO 2012 / 007 032 A1 zeigt ein Reinigungsgerät zur Reinigung der Unterseite eines Fahrzeuges, mit einem Reinigungskopf, der mindestens eine unter Druck stehende Reinigungsflüssigkeit gegen die Unterseite eines Fahrzeuges lenken kann und ein Gehäuse aufweist, das mittels Laufrädern entlang einer Bodenfläche unter das zu reinigende Fahrzeug verfahrbar ist. Der Reinigungskopf kann über eine Schwenkmechanik relativ zum Fahrgestell verschwenkt werden. Eine Wendung um 180 Grad ist jedoch nicht vorgesehen.

Der Erfindung liegt die Aufgabe zugrunde, einen Flächenreiniger der eingangsgenannten Art so weiterzubilden, dass er den beschriebenen Mehrfachnutzen erreicht.

Zur Lösung der gestellten Aufgabe ist die Erfindung durch die technische Lehre des Patentanspruchs 1 gekennzeichnet.

Das den Rotorarm enthaltene, etwa topfförmige und zylindrische Gehäuse ist um 180° wendbar ausgebildet.

Mit dem Begriff um "180° wendbar" ist gemeint, dass der Flächenreiniger im Normalbetrieb mit seinem nach unten gerichteten Gehäuse, welches nach unten bevorzugt mit einem Bürstenring gegenüber der abzureinigenden Fläche abgedichtet ist, um 180° wendbar ist, was bedeutet, dass das Gehäuse vollständig um 180° umgedreht werden kann, so dass der oder die im Gehäuse angeordneten Rotorarme mit den daran angeordneten Sprühdüsen nach oben gegen eine obere, annähernd horizontale abzureinigende Fläche zeigen.

Damit ist der Flächenreiniger in mindestens zwei verschiedenen Betriebsmodi betreibbar, wobei der erste Betriebsmodus aus einem Flächenreinigungsbetrieb mit nach unten gegen einen Boden gerichteten Reinigungsdüsen besteht, wobei der zweite Betriebsmodus als Unterboden-Reinigungsbetrieb ausgebildet ist, bei dem das um 180 Grad gewendeten Gehäuse mit den nach oben gerichteten Reinigungsdüsen gegen eine im Abstand zum Boden gerichtete Reinigungsfläche gerichtet ist. Im Fall einer Unterbodenreinigung ist diese Reinigungsfläche dann annähernd parallel zur Bodenfläche.

Nach der Lehre des Anspruches 1 ist es bevorzugt, wenn der Flächenreiniger ein einziges Fahrwerk zur Abstützung des Gehäuses in der ersten und zweiten Betriebsstellung gegenüber der Bodenfläche aufweist. Damit wird bei geringem Herstellungs- und Unterhaltungsaufwand ermöglicht, dass ein einziges Fahrwerk für beide Betriebsmodi verwendet wird, weil es für den jeweiligen Betriebsmodus umgestellt und gewendet werden kann.

Hierauf ist die Erfindung jedoch nicht beschränkt. Es kann auch vorgesehen sein, dass das Fahrwerk für die Reinigung von Bodenflächen aus nicht-wendbaren Lenkrollen besteht und das weitere Fahrwerk für den anderen Betriebsmodus ebenfalls aus weiteren nicht-wendbaren Lenkrollen und/oder Gleitelementen besteht.

Bei allen Ausführungen wird der Vorteil erreicht, dass sowohl bodenseitige Abreinigungsflächen behandelt werden können als auch dem Boden im Abstand gegenüberliegende Flächen. Solche Flächen sind z.B. die Unterseiten von Kraftfahrzeugen oder dgl. Beispielsweise können mit einem solchen wendbaren Flächenreiniger auch die innen- und außenseitigen Filterflächen von horizontalen Plattenfiltern und anderen, eine ähnliche Geometrie aufweisenden Vorrichtungen gereinigt werden.

Bei allen Reinigungsaufgaben wird es bevorzugt, wenn der Flächenreiniger eine möglichst geringe Bauhöhe aufweist, um eng zusammenstehende, einander gegenüberliegende Flächen reinigen zu können.

Mit der gegebenen technischen Lehre ergibt sich ferner der Vorteil, dass der Hochdruckanschluss mit einer daran ansetzenden Schubstange nicht umgestellt werden muss, denn bei der um 180° erfolgenden Wendung des Gehäuses kann die Hochdruckeinführung ohne Umstellaufwand verbleiben. In bevorzugter Weise erfolgt die Hochdruckeinführung in Form eines Knickgelenkes, welches mindestens im Winkel von 180° oder weniger schwenkbar ausgebildet ist.

Um eine Wendung des Gehäuses von der einen Flachseite um 180° auf die gegenüber liegende Flachseite überhaupt zu ermöglichen, ist es deshalb in einer Weiterbildung der Erfindung vorgesehen, dass das Knickgelenk, welches den Hochdruckanschluss zu einer Hochdruckpistole und einer damit verbundenen Lanze herstellt, außerhalb des Umfangskreises des Gehäuses angeordnet ist, um so eine Wendbarkeit des Gehäuses ohne Kollision mit dem Hochdruckanschluss am Knickgelenk zu ermöglichen.

Auch erfolgt nicht die Einführung des Hochdruckmediums von oben in das gehäusemittige Drehgelenk, wie es beim Stand der Technik bekannt ist, sondern von der Seite, was die Bauhöhe des Gerätes noch weiter vermindert.

Bisher war es nur üblich, das Knickgelenk in den Mittelpunkt des Gehäuses zu verlegen, nämlich dort wo das Drehgelenk für die Rotorarme ansetzt, was jedoch eine Wendung des Gehäuses um 180° verhinderte.

Hier setzt die Erfindung ein, die erkannt hat, dass eine Wendung des Gehäuses um 180° nur dann möglich ist, wenn die Hochdruckeinführung in ein seitlich am Gehäuse ansetzenden Knickgelenk erfolgt, um so das Gehäuse selbst um 180° wendbar zu machen. Der Hochdruckanschluss muss dann bei einer Wendung des Gehäuses nicht umgesteckt werden und beansprucht keine zusätzliche, vermeidbare Bauhöhe.

Neben den oben genannten Massnahmen zur Wendung des Gehäuses sind bevorzugt weitere Massnahmen vorgesehen, um auch das gehäuseseitige Fahrwerk an die Wendbarkeit des Gehäuses anzupassen.

Erfindungsgemäß ist es vorgesehen, dass das Fahrwerk eine Doppelfunktion erfüllt, um das Gehäuse sowohl in der einen Arbeitsstellung (Abreinigung des Bodens) als auch in der anderen Reinigungsstellung (z. B. Unterbodenreinigung) gegenüber der Bodenfläche abzustützen und eine Roll- oder Gleitfunktion zu ermöglichen.

Hierzu ist in einer ersten Ausgestaltung vorgesehen, dass das Fahrwerk in einer bevorzugten Ausführung im Wesentlichen als am Gehäuse befestigten, schwenkbar ausgebildeten Lenkrollen besteht, wobei beim Wechsel von der einen Betriebsart zur anderen die Lenkrollen um 180° verschwenkt und dann am Gehäuse wieder arretiert werden, um auch im Unterbodenbetrieb eine Verfahrbarkeit des Gehäuses auf der Bodenfläche zu ermöglichen.

Dabei ist es vorteilhaft, wenn das Gehäuse mit dem Fahrwerk (nämlich den um 180 Grad schwenkbar angeordneten Lenkrollen) eine geringe Bauhöhe aufweist, um eine günstige Unterbodenreinigung auch bei geringen Bodenfreiheiten von abzureinigenden Unterböden oder anderen Reinigungsflächen zu ermöglichen.

In einer zweiten Ausgestaltung der Erfindung kann es jedoch auch vorgesehen sein, dass der Reinigungsbetrieb in der ersten Art der Flächenreinigung mit einem nach unten gerichteten offenen Gehäuse nicht mit den Lenkrollen arbeitet, sondern dass die Lenkrollen nur für die Betriebsart der Unterbodenreinigung vorgesehen sind, während in der anderen Betriebsart (Flächenreinigung) das Gehäuse lediglich auf dem umlaufenden Bürstenring des Gehäuses über eine abzureinigende Fläche geschoben wird. Die Lenkrollen sind in diesem Fall in ihrer vertikalen Schwenkachse nicht um 180 Grad wendbar oder schwenkbar ausgebildet, sondern sind fest am Gehäuse angeordnet und tragen das Gehäuse nur im Reinigungsmodus der Unterbodenreinigung, während die Lenkrollen im Reinigungsmodus der bodenseitigen Flächenreinigung keine tragende Funktion aufweisen. Mit dieser Ausgestaltung des Fahrwerks kann die Bauhöhe des Flächenreinigers noch weiter vermindert werden.

In einer dritten Ausgestaltung kann das Fahrwerk auch vollständig entfallen, sodass die Abstützung des Gehäuses auf einer Bodenfläche in beiden Betriebsarten nur über Gleitelemente an den beiden gegenüber liegenden Flachseiten des Gehäuses erfolgt.

Ein solcher Entfall des Fahrwerks ermöglicht darüber hinaus einen vertikalen Betrieb des Flächenreinigers, der z.B. dann angewendet wird, wenn der Flächenreiniger im Zwischenraum zwischen zueinander gegenüberliegend und parallel zueinander ausgerichteten, in einer vertikalen Ebene gegenüberstehenden Reinigungsflächen, z.B. den Filterflächen eines Plattenfilters eingeschoben werden soll. Der Flächenreiniger wird dann aus seiner bodenseitigen Reinigungsstellung lediglich um 90 Grad gewendet, um auch diese Reinigungsaufgabe von vertikal ausgerichteten Reinigungsflächen zu lösen.

Dies bedeutet, dass die gehäuseseitige Schwenkbarkeit der Lenkrollen bevorzugt ist und zur Erleichterung des Bedienungskomforts bevorzugt wird.

In Fortbildung des erst genannten Ausführungsbeispiels ist zur Verbesserung des Bedienungskomforts vorgesehen, dass jede Lenkrolle eine Lenkeinheit bildet, die im wesentlichen aus der Lenkrolle selbst besteht, die über eine vertikale Schwenkachse am einen Ende einer horizontalen Winkeltraverse schwenkbar gelagert ist, wobei das andere Ende der Winkeltraverse um 90 Grad abgebogen ist und in einer horizontalen Schwenkachse von einem gehäuseseitigen Schwenkgelenk aufgenommen ist. Die jeweilige Schwenklage wird durch einen federbelasteten Arretierstift arretiert. Zu diesem Zweck ist das Schwenkgelenk mit seiner Schwenkwelle in einem gehäuseseitigen Arretiergehäuse am Außenumfang des Flächenreinigers aufgenommen. Der Arretierstift ist im gehäuseseitigen Arretiergehäuse federbelastet verschiebbar gelagert und das bolzenseitige Ende des Arretierstifts greift federbelastet in eine Rastnut an der Schwenkwelle des Schwenkgelenks ein, so dass durch Ziehen des Arretierstiftes entgegen einer Federkraft das Schwenkgelenk um 180° geschwenkt werden kann.

Das Arretiergehäuse ist dabei am Außenumfang des Gehäuses des Flächenreinigers angeordnet. Vorzugsweise gibt es drei oder mehr Lenkrollen mit dazu gehörenden gehäusefesten Arretiergehäusen, die gleichmässig am Aussenumfang des Flächenreinigers verteilt befestigt sind.

Statt eines Fahrwerkes mit einzeln um 180° schwenkbaren und in der jeweiligen Schwenklage arretierbaren Lenkrollen können auch andere Fahrwerkskonstruktionen verwendet werden, wie z.B. Gleitelemente, Kufen, Kugelelemente und dgl.

In einer Weiterbildung der Erfindung ist es auch vorgesehen, dass die Schubstange für die Bewegung des Flächenreinigers von Hand als Hochdruckpistole ausgebildet ist, was bedeutet, dass eine Hochdruckpistole mit einem Betätigungsgriff unmittelbar über eine Verschraubung mit einem Lanzen-Oberteil verbunden ist und dieses Lanzen-Oberteil über eine Quickverschraubung mit einem Lanzen-Unterteil verschraubt ist, welches Lanzen-Unterteil in das erfindungsgemäße Knickgelenk einmündet. Die zur handbetätigten Bewegung des Flächenreinigers notwendige Schubstange wird demnach durch eine Hochdruckpistole mit daran ansetzender HD-Lanze gebildet.

Erst durch die Verlegung des Knickgelenks aus dem Außenumfang des Flächenreinigungsgehäuses heraus, seitlich und radial nach außen, gelingt es, das Gehäuse um 180° oder weniger zu wenden. Hierzu ist vorgesehen, dass seitlich am Außenumfang des Gehäuses am Knickgelenk ein flüssigkeitsleitendes Verbindungsrohr ansetzt, welches das Hochdruckmedium in den Mittenbereich des Gehäuses zu einem Drehgelenk für den Antrieb des Rotorarms hineinleitet. Das Verbindungsrohr ist dabei parallel zur Deckelfläche des Gehäuses angeordnet und überragt in vorteilhafter Weise nicht das mittige, gehäuseseitige Drehgelenk.

Beim Betrieb in den beiden Betriebsmodi hat sich herausgestellt, dass das für die Lagerung des Rotorarms erforderliche Drehgelenk Axialkräfte in zueinander um 180° entgegengesetzten Richtungen aufnehmen muss. Zu diesem Zweck ist es in einer vorteilhaften Weise vorgesehen, ein speziell hierfür ausgerichtetes Drehgelenk zu verwenden, das die einwirkenden Axialkräfte in zueinander entgegengesetzten Richtungen unter der Einwirkung der hohen Drücke von bis zu 300 bar und der hohen Drehzahlen des Rotorarms aufnehmen kann.

Nach einer weiteren Fortbildung des Erfindungsgedankens ist es vorgesehen, dass beim Unterbodenbetrieb, bei dem das einseitig offene Gehäuse nach oben gerichtet ist, ein Schutzblech im Mittenbereich angeordnet ist, um zu vermeiden, dass Gegenstände von der abzureinigenden Fläche in den Innenraum des nach oben geöffneten Gehäuses hineinfallen.

Das Schutzblech ist mit seinem verminderten Durchmesser jedenfalls so ausgebildet, dass am Aussenumfang noch genügend Platz für den Umlauf der Reinigungsdüsen vorhanden ist.

Durch das Knickgelenk kann man die Hochdruckpistole und die daran angeschlossene Lanze beim Bedienen des Flächenreinigers in einer horizontalen Schwenkachse auf eine passende Höhe kippen. Ferner sind im Deckelbereich des Gehäuses - vorzugsweise um das mittige Drehgelenk herum - noch Auslauföffnungen vorgesehen, so dass beim Unterbodenbetrieb dafür gesorgt ist, dass das Schmutzwasser im Innenraum des nach oben geöffneten Gehäuses durch diese Auslauföffnungen nach unten und außen abfließen kann. Das vorher genannte Schutzblech dient auch dazu, dass ein Eingriff einer Bedienerhand in den Innenraum des Gehäuses im Unterbodenbetrieb vermieden wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Darstellung eines Flächenreinigers in den Betriebsmodus der Flächenreinigung einer Bodenfläche
- Figur 2:: die gleiche Darstellung wie Figur 1 in der Betriebsweise der Unterbodenreinigung
- Figur 3:: den Flächenreiniger in seiner um 180 Grad gewendeten Arbeitsstellung
- Figur 4:: die Seitenansicht des Flächenreinigers in der Arbeitsstellung nach Figur 3
- Figur 5:: eine Detailansicht einer Fahrwerkseinzelheit nach Figur 1

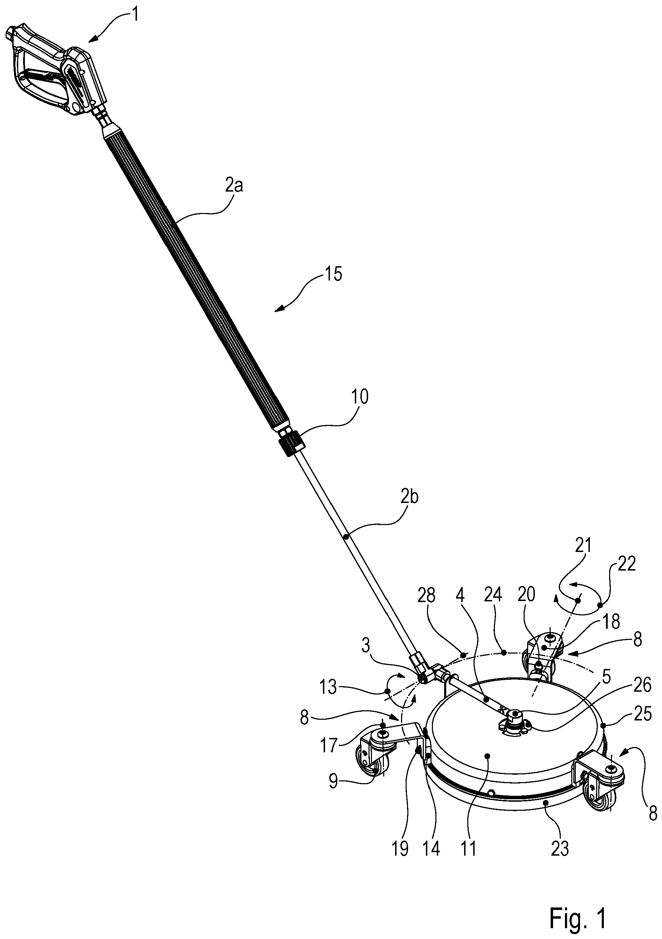

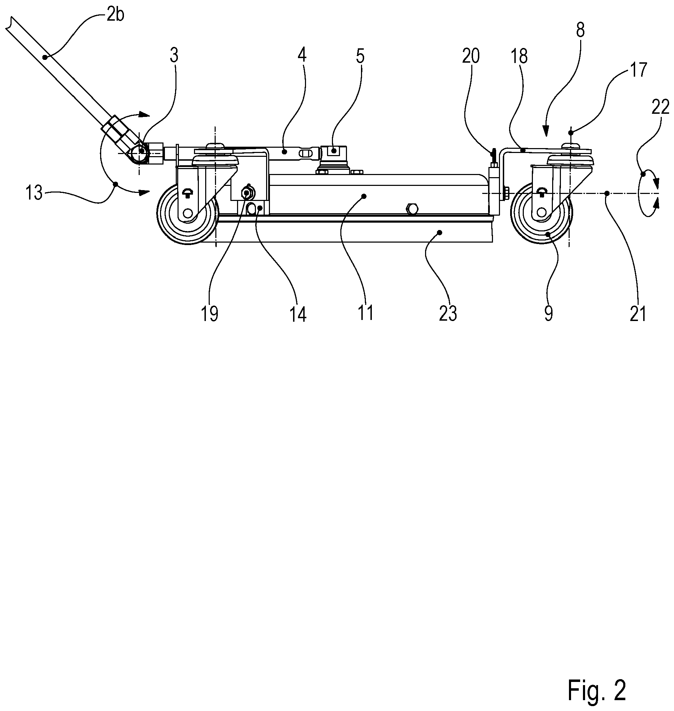

Der in Figur 1 gezeigte Flächenreiniger hat vorzugsweise eine topfförmiges, zylindrisches und nach unten geöffnetes Gehäuse 11. Er wird von Hand über eine Reinigungsfläche geschoben, wobei in Figur 1 die Reinigungsfläche der Boden ist, über den der Flächenreiniger geschoben wird, während in Figur 2 die Reinigungsfläche nicht dargestellt ist, weil sie sich oberhalb des nach oben geöffneten Gehäuses 11 befindet.

Zur handbetätigten Bewegung des Flächenreinigers in beiden Reinigungsmodi wird eine Schubstange 15 verwendet. Im bevorzugten Ausführungsbeispiel besteht die Schubstange 15 des Flächenreinigers aus einer oberen HD-Pistole 1 mit einem geeigneten Betätigungsgriff, die über eine erste Verschraubung flüssigkeitsdicht mit einem Lanzenoberteil 2a verbunden ist.

An der Unterseite des Lanzenoberteils 2a ist eine Quickverschraubung 10 angeordnet, in welche das obere Ende eines Lanzenunterteils 2b aufgenommen ist, welches seinerseits mit seinem unteren Ende über eine Verschraubung in ein gehäuseseitiges Knickgelenk 3 hineinführt, welches bevorzugt in einem Winkelgrad von 180° oder weniger um eine horizontale Schwenkachse 28 schwenkbar ist. Der Schwenkwinkel in Pfeilrichtung 13 kann hierbei 180° oder weniger betragen.

Statt der Ausbildung der Schubstange 15 aus der HD-Pistole 1 und der daran ansetzenden Lanze 2a, 2b kann die Schubstange 15 auch aus einem Rohr bestehen, an dessen oberen Ende die HD-Pistole 1 angeordnet ist, die über einen HD-Schlauch, der außen oder innen am Rohr entlang geführt ist, mit dem Knickgelenk 3 verbunden ist.

Ausgehend vom Knickgelenk 2 führt das Hochdruckmedium über eine weitere Verschraubung in ein etwa horizontal gerichtetes Verbindungsrohr 4, welches mit Hilfe einer Traverse am Außenumfang des Gehäuses 11 befestigt ist, und somit wird das Hochdruckmedium zu dem mittigen Drehgelenk 5 geführt.

Am mittigen Drehgelenk 5 ist im Innenraum des Gehäuses 11 ein Rotorarm 6 drehbar gelagert, wobei das Drehgelenk 5 das Hochdruckmedium zum Rotorarm führt und dabei die relativ hohen Axialkräfte beim Gebrauch sowohl im Flächenreinigungsmodus als auch im Unterbodenreinigungsmodus aufnehmen muss.

Das Gehäuse 11 ist im Wesentlichen zylinderförmig und topfförmig ausgebildet und wird randseitig durch einen etwa umlaufenden Bürstenring 23 abgeschlossen.

Das Hochdruckmedium, welches durch das Drehgelenk 5 eingespeist wird, wirkt demnach unmittelbar auf den Rotorarm 6 und die im freien Ende des Rotorarms schräg nach unten gerichteten Reinigungsdüsen 27, die sich während des HD-Betriebes mit ihrem Sprühstrahl schräg an der Reinigungsfläche abstützen und dadurch den Rotorarm 6 drehend antreiben.

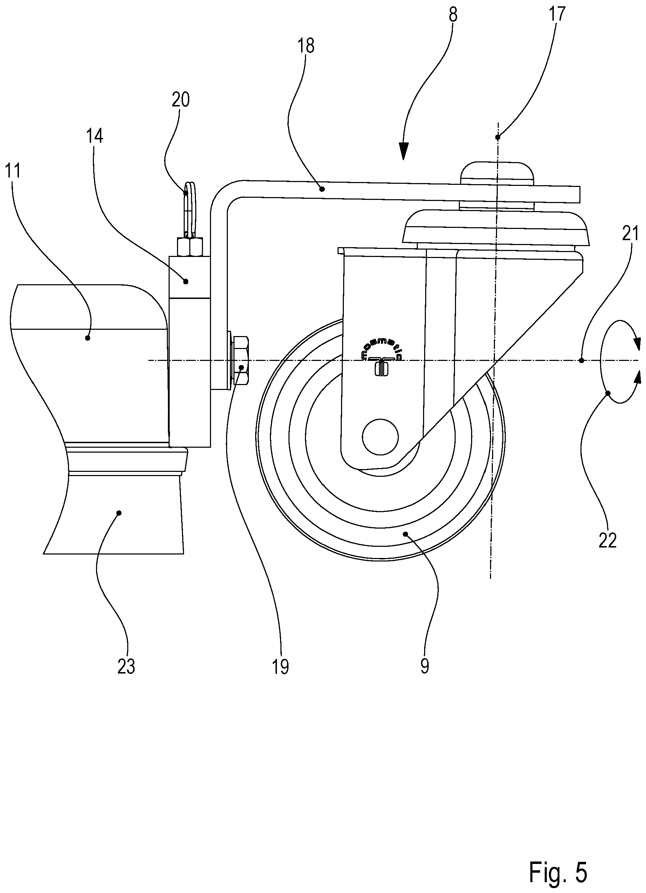

Am Außenumfang des Gehäuses 11 des Flächenreinigers ist ein Fahrwerk angeordnet, welches im gezeigten Ausführungsbeispiel aus drei gleichmäßig am Umfang verteilt angeordneten Lenkeinheiten 8 besteht, wobei jede Lenkeinheit um eine horizontale Schwenkachse 21 in der Pfeilrichtung 22 um 180° schwenkbar ausgebildet ist. Eine Detailansicht der Schwenklagerung einer Lenkrolle 9 ist aus Figur 5 zu entnehmen.

Gemäß Figur 5 weist jede Lenkeinheit eine Lenkrolle 9 auf, die in einem Lagerbock drehbar gelagert ist, der in einer vertikalen Schwenkachse 17 am Ende einer Winkeltraverse 18 aufgenommen ist.

Das andere Ende der Winkeltraverse 18 ist als vertikaler Schenkel abgewinkelt, durch den das Schwenkgelenk 19 hindurchgreift, welches in einem Arretiergehäuse 14 aufgenommen ist. Das Arretiergehäuse 14 ist fest am Außenumfang des Gehäuses 11 befestigt.

Im Arretiergehäuse 14 ist ein Arretierstift 20 federbelastet angeordnet, der mit seinem federbelasteten bolzenseitigen Ende auf eine Rastnut in einer Schwenkwelle des Schwenkgelenks 19 wirkt. Bei eingerücktem Arretierstift 20 wird somit das Schwenkgelenk 19 unter der Kraft einer nicht dargestellten Feder blockiert. Wenn hingegen der Arretierstift 20 entgegen seiner Federkraft gezogen wird, kann die Lenkeinheit 8 in der Schwenkachse 21 um 180° in Pfeilrichtung 22 verschwenkt werden.

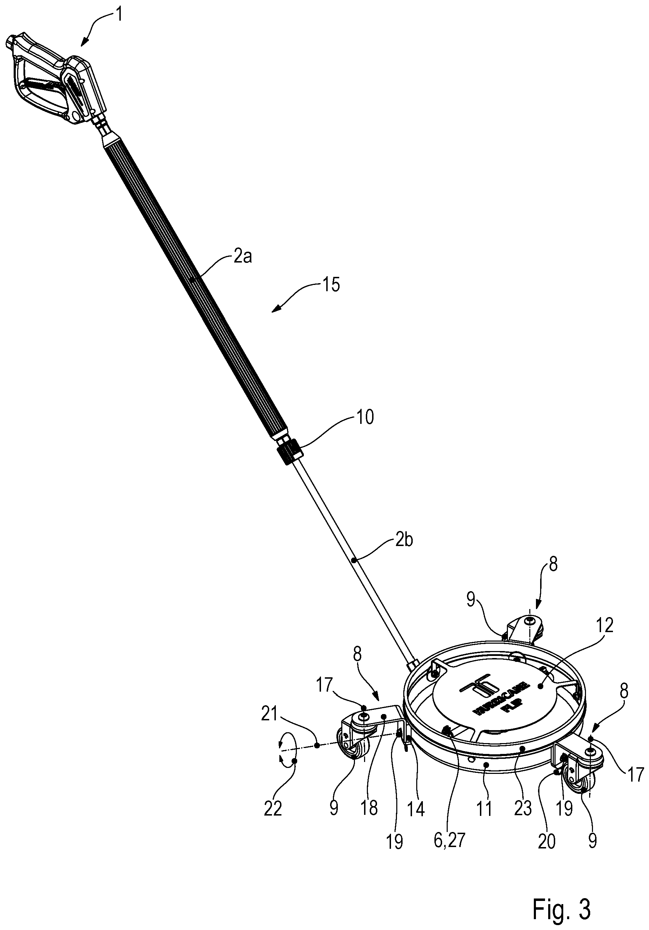

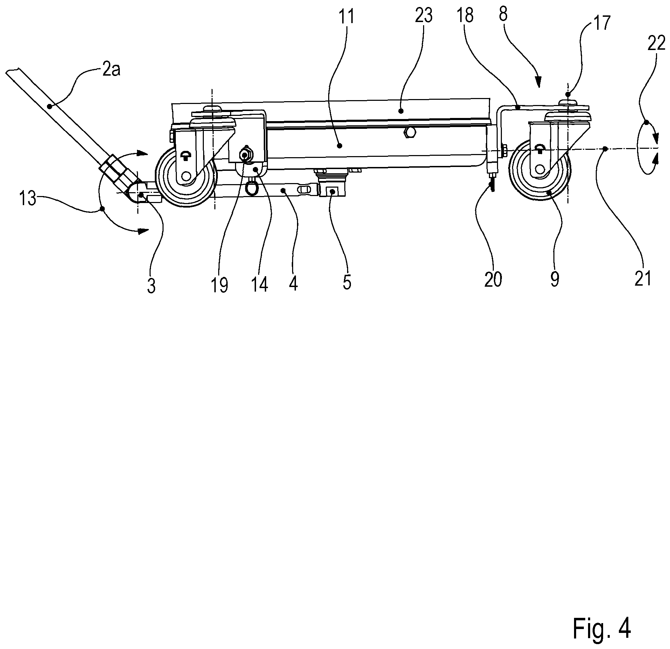

Kennzeichnend für die Wendbarkeit des Gehäuses 11 des Flächenreinigers ist die Tatsache, dass das Knickgelenk 3 für die Einführung des Hochdruckmediums seitlich und außerhalb des Außenumfangs (Umfangskreis 25) des Gehäuses 11 verlegt ist, um so das Gehäuse um 180° wenden zu können. Dies ergibt sich insbesondere aus Figur 4. Dort ist erkennbar, dass im Fall der Umwendung des Flächenreinigers in seine in Figur 3 und 4 gezeigte zweite Arbeitsstellung das Knickgelenk 3 in Bodennähe kommt und der umlaufende Bürstenring 23 das oberste Teil des Flächenreinigers ist.

Demnach liegt das Knickgelenk 3 im Bereich eines Außenkreises 24, dessen Radius größer ist als der Umfangskreis 25 des Gehäuses 11.

Der Radius des Außenkreises 24 sollte bevorzugt nicht größer als der durch die Lenkeinheit 8 gebildete Außenumfang sein. Damit wird ein raumsparender Aufbau erreicht, weil das Knickgelenk den Außendurchmesser des durch die Lenkrollen gebildeten Fahrwerks nicht überragt.

Es kann jedoch auch vorgesehen sein, dass der Radius des Außenkreises 24 den Außenradius der Lenkeinheit 8 überragt. Dies ist in Figur 4 als weitere bevorzugte Ausführung dargestellt. Dabei wird es im Übrigen bevorzugt, wenn die Bauhöhe des Fahrwerks 8, 9, 14, 18, 19 nicht die Bauhöhe des zylindrischen, topfförmigen Gehäuses 11 des Flächenreinigers überragt. Damit kann der Flächenreiniger auch in schmale, schlitzförmige abzureinigende Flächen eingeschoben werden, wie sie z.B. bei den Filterplatten eines Plattenfilters vorhanden sind.

In Figur 1 ist noch eine Auslauföffnung 26 etwa im Mittenbereich des Gehäuses 11 dargestellt, die eine Funktion im zweiten Betriebsmodus nach Figur 2 ausübt. Dies wird später noch erläutert.

Wenn eine Unterbodenreinigung beim Übergang von den Figuren 1 und 2 auf die Figuren 3 und 4 stattfindet, wird der jeweilige Arretierstift 20 an der Lenkeinheit 8 gemäß Figur 5 gezogen, dann wird die Winkeltraverse 18 um die Schwenkachse 21 in Pfeilrichtung 22 verschwenkt und der Arretierstift 20 wird wieder losgelassen, wodurch die Schwenklage der Lenkeinheit 8, 9 in einer um 180 Grad verschwenkten Lage arretiert ist und die Schwenklage nach Figur 3, 4 und 5 einnimmt.

In diesem Unterbodenreinigungsbetrieb ist es in einer bevorzugten Ausgestaltung vorgesehen, dass der nach oben offene Bereich des Gehäuses 11 mindestens teilweise durch ein Schutzblech 12 nach oben hin abgedeckt ist. Der Rotorarm 6 ist damit weitgehend abgedeckt und es sind nur noch Reinigungsdüsen 27 in einem Außenkreis außerhalb des Schutzblechs 12 zugänglich und wirksam. Ein Eingriff am Rotorarm 6 selbst ist dann nicht mehr möglich.

Gleichzeitig wird beim Wechsel der Betriebsart das Knickgelenk 3 um einen Winkel von 180° oder weniger verschwenkt, um die Schwenklage nach Figur 2 zu erreichen.

Im Wendebetrieb ist es also nicht notwendig, die Verschraubung am Knickgelenk 3 zu lösen, weil die Hochdruckeinspeisung als abgedichtetes Knickgelenk 3 ausgebildet ist.

Wie bereits schon in der allgemeinen Beschreibung ausgeführt, ist die Wendbarkeit der Lenkeinheit 8, 9, 18 um 180 Grad nicht lösungsnotwendig. Es kann vorgesehen sein, dass der Flächenreiniger mit der in Figur 2 dargestellten Orientierung der Lenkrollen 9, nämlich mit den nach oben verschwenkten Lenkrollen, deren Stellung eigentlich für den Unterbodenbetrieb vorgesehen sind, auch im Flächenreinigungsmodus nach Figur 1 arbeitet, wodurch dann die Lenkrollen 9 nicht mehr wirksam sind und keine Tragfunktion auf der bodenseitigen Reinigungsfläche ausüben. In diesem Fall rollen die Lenkrollen 9 nicht mehr auf der abzureinigenden Fläche ab, sondern das Gerät wird nur noch über den Bürstenring 23 über die abzureinigende Bodenfläche geschoben. Daraus wird deutlich, dass die Wendbarkeit der Lenkeinheiten um 180° zwar bevorzugt ist, nicht aber unbedingt zwingend lösungsnotwendig ist.

Im dritten, beschriebenen Ausführungsbeispiel kann das Fahrwerk 8, 9, 18 mit den Lenkrollen 9 vollständig entfallen. In diesem Fall sind dann an der Oberseite des Gehäuses 11 nicht näher dargestellte Gleitelemente oder Kufen vorhanden

Vorteil der erfindungsgemäßen Maßnahme des Mehrfachnutzens eines solchen Flächenreinigers ist der geringe Arbeitsaufwand beim Übergang vom Flächenreinigungsbetrieb in den Unterbodenreinigungsbetrieb. Weiterer Vorteil ist die geringe Bauhöhe, die durch die besondere Art der Lenkeinheiten 8, 9, 18 erreicht wird, die in ihrer Bauhöhe nicht die Höhe des Gehäuses 11 überragen.

Ein weiterer Vorteil ist, dass das Knickgelenk 3 auch unter Einwirkung von Hochdruckeinfluss schwenkbar ist, was bedeutet, dass direkt von dem einen Betriebszustand in den anderen umgeschwenkt werden kann, auch wenn Hochdruck am Flächenreinigungsgerät anliegt.

Weiterer Vorteil ist, dass die Lenkeinheiten 8, 9, 18 ohne Werkzeughilfe verschwenkt werden können.

### Zeichnungslegende

- 1: HD-Pistole
- 2: Lanzen-Oberteil 2a; Lanzen-Unterteil 2b
- 3: Knickgelenk
- 4: Verbindungsrohr
- 5: Drehgelenk
- 6: Rotorarm
- 7 8: Lenkeinheit
- 9: Lenkrolle
- 10: Quickverschraubung
- 11: Gehäuse
- 12: Schutzblech
- 13: Pfeilrichtung
- 14: Arretiergehäuse
- 15: Schubstange
- 16 17: Schwenkachse (vertikal)
- 18: Winkeltraverse
- 19: Schwenkgelenk
- 20: Arretierstift
- 21: Schwenkachse (horizontal)
- 22: Pfeilrichtung
- 23: Bürstenring
- 24: Außenkreis
- 25: Umfangskreis (Gehäuse 11)
- 26: Auslauföffnung
- 27: Reinigungsdüse
- 28: Schwenkachse

## Patentansprüche

1. Flächenreiniger mit Anschluss an ein Hochdruckmedium, bestehend aus einem topfförmigen, einseitig offenen Gehäuse (11), in dem mindestens ein Rotorarm (6) an einem gehäusemittigen Drehgelenk (5) drehbar gelagert ist, wobei am Rotorarm (6) ein oder mehrere Reinigungsdüsen (27) angeordnet sind, die flüssigkeitsleitend mit dem durch das Drehgelenk (5) geführten HD-Medium verbunden sind, wobei der Flächenreiniger in mindestens einem ersten und einem zweiten Betriebsmodus betreibbar ist, wobei für den zweiten Betriebsmodus das Gehäuse (11) um 180 Grad wendbar ausgebildet ist, und der zweite Betriebsmodus als Reinigungsbetrieb ausgebildet ist, bei dem das um 180 Grad gewendete Gehäuse (11) mit den nach oben gerichteten Reinigungsdüsen (27) gegen eine im Abstand zum Boden angeordnete Reinigungsfläche gerichtet ist, wobei der Flächenreiniger ein Fahrwerk (8, 9, 17) zur Abstützung des Gehäuses (11) in der ersten und zweiten Betriebsstellung gegenüber der Bodenfläche aufweist, **dadurch gekennzeichnet, dass** der erste Betriebsmodus aus einem Flächenreinigungsbetrieb mit dem nach unten gegen einen Boden gerichteten Gehäuse (11) und den darin angeordneten Reinigungsdüsen (27) besteht.

2. Flächenreiniger nach Anspruch 1, **dadurch gekennzeichnet, dass** das Fahrwerk aus einzelnen, gleichmäßig am Umfang des Gehäuses (11) in einer horizontalen Schwenkachse (21) um 180 Grad schwenkbar und feststellbar ausgebildeten Lenkrollen (9) besteht.

3. Flächenreiniger nach einem der Ansprüche 1 oder 2, **dadurch gekennzeichnet, dass** jede Lenkrolle (9) eine Lenkeinheit (8) bildet, die über eine vertikale Schwenkachse (17) am einen Ende einer horizontalen Winkeltraverse (18) schwenkbar gelagert ist, dass das andere Ende der Winkeltraverse (18) um 90 Grad abgebogen in einer horizontalen Schwenkachse von einem gehäuseseitigen Schwenkgelenk (19) aufgenommen ist, und dass die jeweilige Schwenklage des Schwenkgelenks ((19) durch einen federbelasteten Arretierstift (20) arretierbar ist.

4. Flächenreiniger nach einem der Ansprüche 1 bis 3, **dadurch gekennzeichnet, dass** der Flächenreiniger zwei voneinander getrennte Fahrwerke zur Abstützung des Gehäuses (11) in der ersten und zweiten Betriebsstellung gegenüber der Bodenfläche aufweist.

5. Flächenreiniger nach Anspruch 4, **dadurch gekennzeichnet, dass** der Flächenreiniger ein erstes Fahrwerk (8, 9, 17) nur zur Abstützung des Gehäuses (11) in der ersten Betriebsstellung gegenüber der Bodenfläche aufweist, und dass ein zweites Fahrwerk (8, 9, 17) nur zur Abstützung des Gehäuses (11) in der zweiten Betriebsstellung gegenüber der Bodenfläche vorhanden ist.

6. Flächenreiniger nach einem der Ansprüche 1 bis 5, **dadurch gekennzeichnet, dass** das Hochdruckmedium über eine handbetätigte Schubstange (15) in ein gelenkig und seitlich am Gehäuse (11) des Flächenreinigers ansetzendes Knickgelenk (3) geführt ist.

7. Flächenreiniger nach einem der Ansprüche 1 bis 6, **dadurch gekennzeichnet, dass** der Flächenreiniger in einem dritten Betriebsmodus betreibbar ist, indem das Gehäuse (11) um lediglich 90 Grad aus seiner ersten oder zweiten Betriebsstellung gewendet wird.

8. Flächenreiniger nach einem der Ansprüche 1 bis 7, **dadurch gekennzeichnet, dass** zur Verminderung der Bauhöhe des Flächenreinigers die Einführung des Hochdruckmediums in das gehäusemittige Drehgelenk (5) über ein seitlich am Drehgelenk (5) ansetzendes Verbindungsrohr (4) erfolgt, das flüssigkeitsleitend mit dem Knickgelenk (3) verbunden ist.

9. Flächenreiniger nach einem der Ansprüche 1 bis 8, **dadurch gekennzeichnet, dass** die Schubstange (15) des Flächenreinigers durch eine handbetätigbare HD-Pistole (1) gebildet ist, die mit einer Hochdrucklanze (2a, 2b) flüssigkeitsleitend verbunden ist.

10. Flächenreiniger nach Anspruch 9, **dadurch gekennzeichnet, dass** die Hochdrucklanze (2) aus zwei miteinander verschraubten Lanzenteilen (2a, 2b) besteht und dass das untere Lanzenteil (2b) mit dem gehäuseseitigen Knickgelenk (3) abgedichtet verschraubt ist.

11. Flächenreiniger nach einem der Ansprüche 1 bis 10, **dadurch gekennzeichnet, dass** im Innenraum des Gehäuses (11) ein teilweise den Rotorarm ((6) abdeckendes, die Reinigungsdüsen (27) freilassendes Schutzblech (12) angeordnet ist.

12. Flächenreiniger nach einem der Ansprüche 1 bis 11, **dadurch gekennzeichnet, dass** im Deckelbereich des Gehäuses (11) ein oder mehrere Auslauföffnungen (26) angeordnet sind.

13. Flächenreiniger nach einem der Ansprüche 1 bis 12, **dadurch gekennzeichnet, dass** der Flächenreiniger eine geringe Bauhöhe aufweist, um eng zusammenstehende, um im Winkel von 180 Grad einander gegenüberliegende Flächen reinigen zu können.

14. Flächenreiniger nach einem der Ansprüche 1 bis 13, **dadurch gekennzeichnet, dass** zum Wechsel zwischen den beiden Betriebsmodi die Wendung des Gehäuses (11) von der einen Flachseite um 180° auf die gegenüber liegende Flachseite erfolgt.

15. Flächenreiniger nach einem der Ansprüche 1 bis 14, **dadurch gekennzeichnet, dass** das Gehäuse (11) mit dem Fahrwerk (8, 9) eine geringe Bauhöhe aufweist, sodass eine günstige Unterbodenreinigung auch bei geringen Bodenfreiheiten von abzureinigenden Unterböden oder anderen Reinigungsflächen möglich ist.

## Claims

1. Surface cleaner with connection to a high-pressure medium, consisting of a pot-shaped housing (11) open on one side, in which at least one rotor arm (6) is rotatably mounted on a swivel joint (5) in the centre of the housing, wherein one or more cleaning nozzles (27) are arranged on the rotor arm (6), which are connected in a fluid-conducting manner to the HP medium guided through the swivel joint (5), wherein the surface cleaner can be operated in at least a first and a second operating mode, wherein the housing (11) is designed to be able to turn 180 degrees for the second operating mode, and the second operating mode is designed as a cleaning operation in which the housing (11) turned by 180 degrees with the cleaning nozzles (27) pointing upwards is directed toward a cleaning surface arranged at a distance from the floor, wherein the surface cleaner has a chassis (8, 9, 17) to support the housing (11) in the first and second operating positions relative to the floor surface, **characterised in that** the first operating mode consists of a surface cleaning operation with the housing (11) and the cleaning nozzles (27) arranged therein pointing downwards toward a floor.

2. Surface cleaner according to claim 1, **characterised in that** the chassis consists of individual castors (9) designed uniformly on the circumference of the housing (11) on a horizontal pivot axis (21) pivotable and lockable about 180 degrees.

3. Surface cleaner according to one of claims 1 or 2, **characterised in that** each castor (9) forms a swivel unit (8) which is pivotably mounted via a vertical pivot axis (17) at the one end of a horizontal angled bar (18), **in that** the other end of the angled bar (18) bent by 90 degrees is received in a horizontal pivot axis of a pivot joint (19) on the housing side, and **in that** the respective pivot position of the pivot joint (19) can be locked by a spring-loaded locking pin (20).

4. Surface cleaner according to one of claims 1 to 3, **characterised in that** the surface cleaner has two chassis separated from one another to support the housing (11) in the first and second operating positions relative to the floor surface.

5. Surface cleaner according to claim 4, **characterised in that** the surface cleaner has a first chassis (8, 9, 17) only to support the housing (11) in the first operating position relative to the floor surface, and **in that** a second chassis (8, 9, 17) is present only to support the housing (11) in the second operating position relative to the floor surface.

6. Surface cleaner according to one of claims 1 to 5, **characterised in that** the high-pressure medium is guided via a manually operated connecting rod (15) into an articulated joint (3) attached in a flexible manner and laterally on the housing (11) of the surface cleaner.

7. Surface cleaner according to one of claims 1 to 6, **characterised in that** the surface cleaner can be operated in a third operating mode **in that** the housing (11) is turned by only 90 degrees from its first or second operating position.

8. Surface cleaner according to one of claims 1 to 7, **characterised in that** to reduce the overall height of the surface cleaner, the high-pressure medium is introduced into the swivel joint (5) in the centre of the housing via a connecting tube (4) attached laterally on the swivel joint (5) and which is connected to the articulated joint (3) in a fluid-conducting manner.

9. Surface cleaner according to one of claims 1 to 8, **characterised in that** the connecting rod (15) of the surface cleaner is formed by a manually operable HP gun (1) which is connected to a high-pressure lance (2a, 2b) in a fluid-conducting manner.

10. Surface cleaner according to claim 9, **characterised in that** the high-pressure lance (2) consists of two lance parts (2a, 2b) screwed to one another, and **in that** the lower lance part (2b) is screwed to the articulated joint (3) on the housing side in a sealed manner.

11. Surface cleaner according to one of claims 1 to 10, **characterised in that** a protective plate (12) which partially covers the rotor arm (6) and leaves the cleaning nozzles (27) uncovered is arranged in the interior of the housing (11).

12. Surface cleaner according to one of claims 1 to 11, **characterised in that** one or more outlet openings (26) are arranged in the cover region of the housing (11).

13. Surface cleaner according to one of claims 1 to 12, **characterised in that** the surface cleaner has a low overall height in order to be able to clean surfaces close to one another and opposite one other at an angle of 180 degrees.

14. Surface cleaner according to one of claims 1 to 13, **characterised in that** to switch between the two operating modes, the housing (11) is turned from the one flat side by 180° to the opposite flat side.

15. Surface cleaner according to one of claims 1 to 14, **characterised in that** the housing (11) with the chassis (8, 9) has a low overall height, such that favourable subfloor cleaning is possible even with little floor clearances of subfloors or other cleaning surfaces to be cleaned.

## Revendications

1. Nettoyeur de surface avec raccord à un médium à haute pression, constitué d'un boîtier (11) ouvert d'un côté, en forme de pot, dans lequel au moins un bras de rotor (6) est supporté de manière rotative sur une articulation rotative (5) au centre du boîtier, dans lequel une ou plusieurs buses de nettoyage (27) sont agencées sur le bras de rotor (6), buses qui sont reliées en communication fluidique avec le médium à haute pression guidé à travers l'articulation rotative (5), dans lequel le nettoyeur de surface peut fonctionner dans au moins un premier et un second mode de fonctionnement, dans lequel pour le second mode de fonctionnement, le boîtier (11) est réalisé de manière à pouvoir être retourné de 180 degrés, et le second mode de fonctionnement est réalisé en tant que fonctionnement de nettoyage, pendant lequel le boîtier (11) retourné de 180 degrés est dirigé avec les buses de nettoyage (27) dirigées vers le haut contre une surface de nettoyage agencée à distance par rapport au sol, dans lequel le nettoyeur de surface présente un châssis (8, 9, 17) pour l'appui du boîtier (11) dans la première et seconde position de fonctionnement par rapport à la surface de sol, **caractérisé en ce que** le premier mode de fonctionnement est constitué d'un fonctionnement de nettoyage de surface avec le boîtier (11) dirigé vers le bas contre un sol et les buses de nettoyage (27) agencées dedans.

2. Nettoyeur de surface selon la revendication 1, **caractérisé en ce que** le châssis est constitué de roulettes directrices (9) individuelles, réalisées uniformément sur la périphérie du boîtier (11), de manière pivotante dans un axe de pivotement horizontal (21) sur 180 degrés et blocable.

3. Nettoyeur de surface selon l'une des revendications 1 ou 2, **caractérisé en ce que** chaque roulette directrice (9) forme une unité directrice (8) qui est supportée de manière pivotante par l'intermédiaire d'un axe de pivotement vertical (17) à une extrémité d'une traverse angulaire horizontale (18), que l'autre extrémité de la traverse angulaire (18) pliée de 90 degrés est reçue dans un axe de pivotement horizontal d'une articulation pivotante (19) côté boîtier, et que la position pivotante respective de l'articulation pivotante (19) peut être arrêtée par une tige d'arrêt (20) sollicitée par ressort.

4. Nettoyeur de surface selon l'une des revendications 1 à 3, **caractérisé en ce que** le nettoyeur de surface présente deux châssis séparés l'un de l'autre pour l'appui du boîtier (11) dans la première et seconde position de fonctionnement par rapport à la surface de sol.

5. Nettoyeur de surface selon la revendication 4, **caractérisé en ce que** le nettoyeur de surface présente un premier châssis (8, 9, 17) seulement pour l'appui du boîtier (11) dans la première position de fonctionnement par rapport à la surface de sol, et qu'un second châssis (8, 9, 17) est présent seulement pour l'appui du boîtier (11) dans la seconde position de fonctionnement par rapport à la surface de sol.

6. Nettoyeur de surface selon l'une des revendications 1 à 5, **caractérisé en ce que** le médium à haute pression est guidé par l'intermédiaire d'une tige de poussée (15) actionnée à la main dans une articulation pivotante (3) se fixant de manière articulée et latérale au boîtier (11) du nettoyeur de surface.

7. Nettoyeur de surface selon l'une des revendications 1 à 6, **caractérisé en ce que** le nettoyeur de surface peut fonctionner dans un troisième mode de fonctionnement, dans lequel le boîtier (11) est retourné d'exactement 90 degrés depuis sa première ou seconde position de fonctionnement.

8. Nettoyeur de surface selon l'une des revendications 1 à 7, **caractérisé en ce que** pour la réduction de la hauteur de construction du nettoyeur de surface, l'introduction du médium haute pression est effectuée dans l'articulation rotative (5) au centre du boîtier par l'intermédiaire d'un tube de liaison (4) se fixant latéralement à l'articulation rotative (5) qui est relié en communication fluidique à l'articulation pivotante (3) .

9. Nettoyeur de surface selon l'une des revendications 1 à 8, **caractérisé en ce que** la tige de poussée (15) du nettoyeur de surface est formée par un pistolet haute pression (1) actionnable à la main qui est relié en communication fluidique à une lance haute pression (2a, 2b) .

10. Nettoyeur de surface selon la revendication 9, **caractérisé en ce que** la lance haute pression (2) est constituée de deux parties de lance (2a, 2b) vissées l'une à l'autre et que la partie de lance inférieure (2b) est vissée de manière étanche à l'articulation pivotante (3) côté boîtier.

11. Nettoyeur de surface selon l'une des revendications 1 à 10, **caractérisé en ce qu'**une tôle de protection (12) laissant libre les buses de nettoyage (27), recouvrant partiellement le bras de rotor (6) est agencée dans l'espace intérieur du boîtier (11).

12. Nettoyeur de surface selon l'une des revendications 1 à 11, **caractérisé en ce qu'**une ou plusieurs ouvertures de sortie (26) sont agencées dans la zone de couvercle du boîtier (11).

13. Nettoyeur de surface selon l'une des revendications 1 à 12, **caractérisé en ce que** le nettoyeur de surface présente une hauteur de construction faible afin de pouvoir nettoyer des surfaces étroitement assemblées, opposées l'une à l'autre dans un angle de 180 degrés.

14. Nettoyeur de surface selon l'une des revendications 1 à 13, **caractérisé en ce que** pour le changement entre les deux modes de fonctionnement, le retournement du boîtier (11) s'effectue depuis un côté plat de 180° sur le côté plat opposé.

15. Nettoyeur de surface selon l'une des revendications 1 à 14, **caractérisé en ce que** le boîtier (11) présente avec le châssis (8, 9) une faible hauteur de construction de sorte qu'un nettoyage de plancher avantageux soit aussi possible en cas de faibles gardes au sol de planchers à nettoyer ou autres surfaces de nettoyage.
